# EUROPEAN PATENT APPLICATION

(11) **EP 4 542 579 A1**
(43) Date of publication of application: **23.04.2025**
(21) Application number: 23306830.3
(22) Date of filing: 19.10.2023
(51) Int. Cl.: G21C 19/02, G21C 19/20

(54) **METHOD FOR RETRIEVING A FOREIGN MATERIAL INSIDE AN INSTALLATION**

(71) Applicant: Westinghouse Electrique France SAS, 91140 Villejust (FR)
(72) Inventor: LEMAIRE, Olivier, 91140 VILLEJUST (FR)
(74) Representative: Santarelli

(57) **Abstract**

The invention relates to a method of retrieving a foreign material (10), located in an internal space (2) of an installation (1), comprising steps of:
- capturing (S2) the foreign material (10) with an encapsulating product (20), the step of capturing (S2) comprising:
• a step of discharging (S21) the encapsulating product (20) onto the foreign material (10)
• a step of encapsulating (S23) at least a portion of the foreign material (10) with the encapsulating product (20); and
• a step of solidifying (S23) the encapsulating product (20) around the at least one portion of the foreign material (10) whereby the foreign material (10) is mechanically secured into the solidified encapsulating product (20); and
displacing the solidified encapsulating product (20) so as to displace the foreign material (10).

## Description

### TECHNICAL FIELD

The invention relates to a method for retrieving a foreign material located in an installation, such a foreign material being not directly accessible to humans and/or difficult to grasp by conventional means.

According to a particular embodiment, the invention is described below with reference to the retrieval of a foreign material located inside a pipe of a cooling circuit of a nuclear reactor. However, it should be noted that the invention is applicable to many other applications where quick and reliable retrieval of a foreign material is required.

### BACKGROUND OF THE INVENTION

Foreign material exclusion (FME) deals with avoiding any introduction of a foreign material into a system, or retrieving such a foreign material out of such a system, in order to prevent any damage to the system, or other related impact on safety of the system or personal injuries.

Such a foreign material can comprise an object, for example, a debris, a dropped tool, etc.

FME is particularly relevant within the context of nuclear power plant in order to enhance nuclear safety and reduce nuclear power plant downtime.

The introduction of a foreign material into an internal space of a nuclear reactor installation, such as a cooling circuit, pool or heat exchanger, can lead to deterioration or failure of the installation and, consequently, a loss of production.

In addition, this can increase operating and maintenance costs, as well as risks to worker safety.

In this context, retrieving a foreign material becomes essential in order to prevent damages to the nuclear reactor and/or operating failure.

To do this, it is known to use a retrieval device comprising a suction and/or a gripping mechanism, such as a clamp.

However, such a device has limitations in terms of suitability for reaching certain areas in the internal space of the installation, in particular narrow and/or winding areas, and in terms of effectiveness in capturing the foreign material, in particular when the installation contains a liquid in which the foreign material is submerged.

Also, the known retrieval device is insufficiently versatile to capture a foreign material of any shape or size.

### SUMMARY OF THE INVENTION

The invention relates to a method of retrieving a foreign material, located in an internal space of an installation, comprising steps of:
- capturing the foreign material with an encapsulating product, the step of capturing comprising:
   - a step of discharging the encapsulating product onto the foreign material;
   - a step of encapsulating at least a portion of the foreign material with the encapsulating product; and
   - a step of solidifying the encapsulating product around the at least one portion of the foreign material whereby the foreign material is mechanically secured into the solidified encapsulating product; and
- displacing the solidified encapsulating product so as to displace the foreign material.

By "encapsulation" or "step of encapsulating" is meant a step by which the encapsulating product is applied around at least a portion of the foreign material in order to form a solid layer of containment around that material. This solid layer, once formed, envelops at least the portion of the foreign material so as to hold it, creating a cohesive structure that facilitates handling and movement of the foreign material.

The method makes it possible to retrieve foreign materials of various shapes and sizes, while being relatively simple to implement.

The method requires limited equipment and does not require a specific device or tool for a particular shape or size of foreign material.

Such a method can therefore be implemented quickly and efficiently, which is particularly safe in the case of a foreign material located in a nuclear reactor installation.

Other particularities and advantages of the invention will also emerge from the following features. According to an example embodiment, the step of solidifying is carried out at a temperature comprised between 10°C and 50°C.

This means the method can be carried out in a wide variety of situations. Within this temperature range, no additional equipment is required for the encapsulating product to solidify.

According to an example embodiment, the step of solidifying is carried out within a liquid.

This makes it possible to effectively capture the foreign material when it is submerged in a liquid. The method thus allows a foreign material to be effectively retrieved when the installation contains a liquid in which the foreign material is submerged.

According to an example embodiment, the step of solidifying takes place between 5 minutes and 4 hours after the step of discharging. For example, the step of solidifying takes place between 5 minutes and 30 minutes, in particular between 10 minutes and 20 minutes.

Thus, solidification occurs sufficiently late for the encapsulating product to discharge onto the foreign material and spread sufficiently to encapsulate at least part of it, but is unnecessarily long, i.e it does not increase the duration of the method for no reason.

As a result, installation downtime can be reduced.

According to an example embodiment, the method comprises a step of mixing two components to obtain said encapsulating product.

For example, the encapsulating product is a bi-component addition silicone, the mixing of the components forming the encapsulating product triggers, within a certain time, the solidification of the encapsulating product.

For example, the encapsulating product is a room temperature vulcanisation silicone.

This facilitates implementation of the method, as no device for heating the encapsulant product is required.

According to an example embodiment, the step of discharging is carried out by means of a retrieval device, said retrieval device comprising a conveying duct.

According to an example embodiment, the method comprises a step of inserting at least part of the conveying duct of said retrieval device into the internal space of the installation, the encapsulating product being discharged from one end of the said conveying duct.

The conveying duct allows the encapsulating product to be guided to the foreign material and may, in certain cases, make it possible to reduce the quantity of encapsulating product.

The device also facilitates the retrieval of the foreign material in that it can be handled from outside the installation.

According to an example embodiment, the retrieval device comprises means for detecting the foreign material, the means for detecting comprising a camera.

The various steps in the method can be precisely monitored from outside the installation, facilitating the recovery.

### BRIEF DESCRIPTION OF THE DRAWINGS

Additional features and advantages of the present invention are described in, and will be apparent from, the description of specific embodiments which are set out below with reference to the drawings in which:
Figure 1 is a schematic view showing an insertion of a conveying duct of a retrieval device into an internal space of an installation comprising a foreign material, according to one embodiment of the invention;
Figure 2 is a schematic view showing a discharge of an encapsulating product into the internal space of the installation by means of the conveying duct and encapsulation of the foreign material by the encapsulating product, according to one embodiment of the invention; and
Figure 3 is a schematic view showing displacement of the solidified encapsulating product and retrieval of the foreign material according to one embodiment of the invention.

### DETAILED DESCRIPTION OF THE INVENTION

An example of a method for retrieving a foreign material 10 located in an internal space 2 of an installation 1 is described with reference to the attached figures.

According to a particular application of the invention, the installation 1 can be a nuclear reactor installation or a part of a nuclear reactor installation, for example a cooling circuit pipe or a pool, in which the presence of the foreign material 10 represents a risk for the safety and operation of the nuclear reactor.

Other applications are of course conceivable.

For example, the installation 1 may be a tank, a reservoir, an exchanger or any other part that makes it difficult for humans to access the foreign material in their internal space 2. The installation can also be of different sizes and shapes, despite its schematic representation in the figures.

The installation 1 further comprises an opening 4 giving access into the internal space 2.

The opening 4 may be pre-existing as a feature initially provided on the installation 1, or specially arranged to facilitate retrieval of the foreign material 10.

For example, if the installation 1 is a cooling circuit pipe, the opening may correspond to a pre-existing end of the pipe or to a cut-out made in the pipe.

According to one example embodiment, the internal space 2 may contain a liquid, and/or a gas.

For example, the liquid may be a coolant such as water, or any other liquid. For example, the gas may be an ambient air.

For example, the foreign material 10 may be submerged in this liquid. Typically, the foreign material 10 is a solid body.

The foreign material 10 can be of different dimension, shape and mass despite its schematic representation in the figures.

By way of example, the foreign material may be debris, a tool or a spare part from the installation.

In the illustrated embodiment, the foreign material 10 rests on a wall 3 delimiting the internal space 2 of the installation 1.

This foreign material 10 can be difficult to access due to the size and configuration of the internal space 2 and/or to the size and configuration of the opening 4.

In particular, the internal space may comprise obstructions or restrictions that make it difficult to access or retrieve the foreign material.

It is therefore necessary to provide a suitable solution for retrieving the foreign material in both a gaseous and/or a liquid environment.

It is also necessary to provide a solution for retrieving foreign materials of various sizes and shapes, without having to adapt the solution depending on the foreign material to be retrieved.

The method for retrieving the foreign material, according to one example embodiment of the invention, can be carried out by any means.

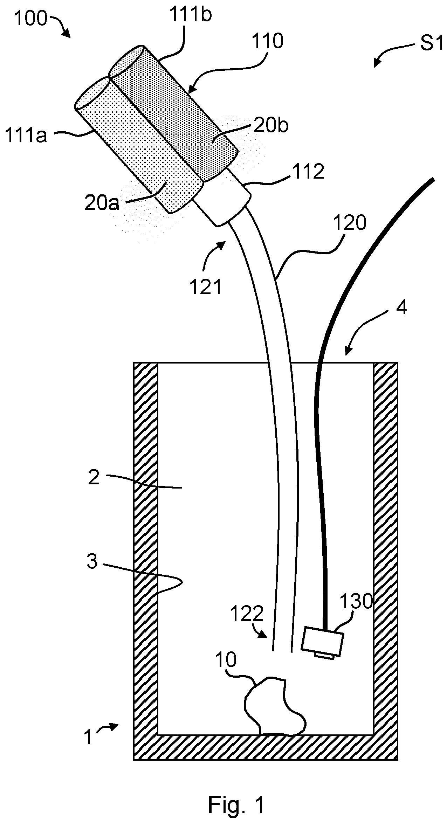

With reference to Figure 1, the method for retrieving the foreign material 10 can comprise a step of detecting S1 a foreign material 10 in the internal space 2.

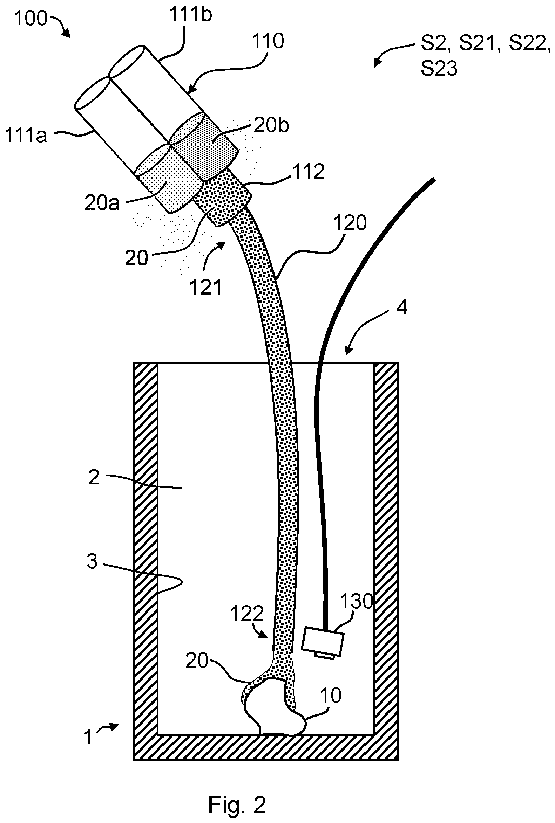

With reference to Figure 2, the method for retrieving the foreign material 10 comprises a step of capturing S2 the foreign material 10 with an encapsulating product 20.

The encapsulating product 20 is initially fluid, past-like or even liquid.

Whatever the environment in which the foreign material 10 is submerged, the density of the encapsulating product 20 if greater than a density of this environment.

For example, the encapsulating product 20 has a viscosity of between 10 Pa.s and 30 Pa.s when the environment is a liquid.

For example, the encapsulating product 20 is more thixotropic when the environment is a gas, for example when the foreign material 10 is exposed to air.

For example, the encapsulating product 20 comprises mainly a polymer product.

For example, the step of capturing S2 comprises a step of mixing two components 20a and 20b to obtain said encapsulating product 20.

Thus, the encapsulating product 20 can be a bi-component.

For example, the encapsulating product 20 is a bi-component addition silicone.

In particular, the encapsulating product 20 is a room temperature vulcanization (RTV) silicone.

The step of capturing S2 comprises a step of discharging S21 the encapsulating product 20 in the internal space 2 onto the foreign material 10.

The step of capturing S2 can also comprise a step of introducing the encapsulating product 20 in the internal space 2 through the opening 4.

When the encapsulating product 20 comes into contact with the foreign material 10, the step of capturing S2 then comprises a step of encapsulating S22 at least a portion of the foreign material 10.

The step of encapsulating S22 comprises a step of spreading the encapsulating product 20 over at least a portion of the foreign material 10.

As a result, at least a portion of the foreign material 10 is encapsulated by the encapsulating product 20. As will be explained later, it is not necessary for the encapsulating product 20 to completely encapsulate the foreign material 10.

The encapsulating product 20 is configured to solidify after encapsulation of the foreign material 10 by the encapsulating product.

In other words, the step of capturing S2 comprises a step of solidifying S23 the encapsulating product 20 over the portion of the foreign material 10.

The time required for the encapsulating product 20 to solidify depends on the time considered necessary for the encapsulating product 20 to discharge and to encapsulate the foreign material 10.

The step of solidifying S23 must occur sufficiently late for the encapsulating product 20 to discharge onto the foreign material 10 and spread sufficiently to encapsulate at least part of it, but must not be unnecessarily long, at the risk of increasing the duration of the method for no reason.

For example, the step of solidifying S23 takes place between 5 minutes and 4 hours after the step of discharging S21.

According to another example, solidification takes place between 5 minutes and 30 minutes after the step of discharging S21.

According to yet another example, solidification takes place between 10 minutes and 20 minutes after the step of discharging S21.

The duration required to carry out the step of solidifying S23 can start from the step of mixing components.

For example, the step of solidifying S23 is carried out at ambient temperature (for example between 10°C and 50°C, or even between 10°C and 30°C), for example without the need for heating, which facilitates implementation of the method for retrieving the foreign material 10.

For example, the step of solidifying S23 is carried out within a liquid, i.e. without the need to be exposed to a gas, for example to open air. This is particularly advantageous when the foreign material 10 is in a liquid.

When the encapsulating product 20 solidifies around at least a portion of the foreign material 10, the encapsulating product 20 and the foreign material 10 are mechanically secured one to each other.

In particular, the step of solidifying S23 can comprise a step of forming a solid layer enveloping at least a portion of the foreign material 10. This solid layer creates a cohesive structure that facilitates handling and displacement of the foreign material 10.

Depending on the geometrical configuration of the foreign material 10, the solidification can also comprise a step of forming a depression between said solidified encapsulating product 20 and a surface of the at least one portion of the foreign material 10. This makes it possible to mechanically bond the solidified encapsulating product 20 with the foreign material 10, thus creating a suction cup-type effect. This is particularly noticeable when the surface of the at least one portion foreign material 10 is flat.

It is therefore sufficient for a portion of the foreign material 10 to be encapsulated by the encapsulating product 20 to mechanically bond the encapsulating product 20 and the foreign material 10 together, thereby capturing the foreign material effectively.

However, the step of encapsulating at least a portion of the foreign material can be replaced by a step of encapsulating integrally the foreign material, in order to further improve the mechanical bond and capture efficiency.

The step of solidifying S23 may further comprise a step of solidification of of an additional part of encapsulating product 20 which is connected to the part of encapsulating product which is solidified around at least a portion of the foreign material 10.

For example, the step of encapsulating S22 and/or the step of solidifying S23 are carried out without chemically or mechanically altering the foreign material 10, nor the material of the wall 3. This limits or even prevents the encapsulating product 20 from adhering to the foreign material 10, nor to the material of the wall 3, when the encapsulating product 20 is solidified.

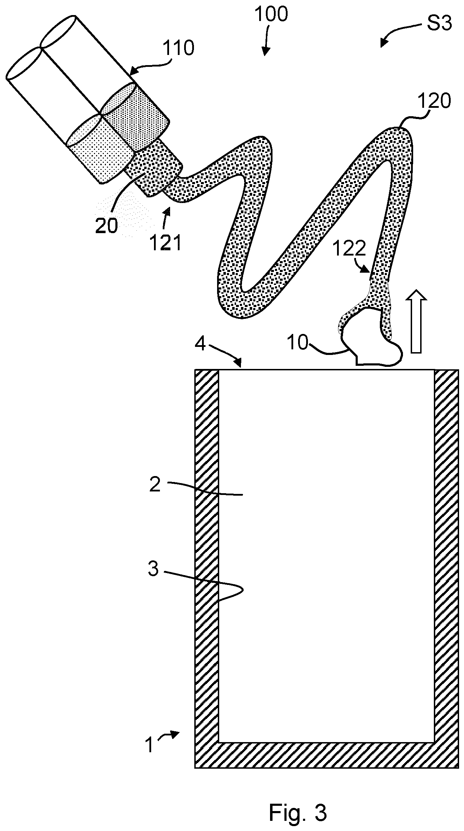

As shown in Figure 3, the method comprises a step of displacing S2 the solidified encapsulating product 20, pulling the foreign material 10 with it.

For example, the step of displacing S3 the solidified encapsulating product 10 comprises a step of pulling S31 on the solidified encapsulated product 20, in particular on the solidified additional part of the encapsulated product.

The solidified encapsulating product 20 can be pulled by any means.

According to one example embodiment, the step of pulling S31 on a solidified part of the encapsulated product 20 can be carried by using an appropriate device, i.e. a device configured to pull on the solidified encapsulating product.

In this way, it is possible to easily displace the foreign material 10, in particular to displace it to a less sensitive area of the installation 1 or to remove it from the installation, as shown in Figure 3.

For example, the step of displacing S3 the solidified encapsulating product 20 is carried out from outside the installation 1.

In the practical embodiment illustrated in Figures 1 to 3, the encapsulating product 20 is initially stored and then discharged using a retrieval device 100.

The retrieval device 100 comprises an injection system 110, and a conveying duct 120.

The conveying duct 120 comprises a first end 121 and a second end 122 opposite the first end 121, the second end 122 being also called "free end".

The first end 121 is fluidically connected to the injection system 110.

According to one example, illustrated in Figure 2, the injection system 110 comprises a first container 111a, a second container 111b distinct from the first container 111a and a mixing unit 112 configured to mix a component contained in the first container 111a and a component contained in the second container 111b.

In particular, the mixing unit 112 is fluidically connected, at an inlet, to each of the first container 111a and the second container 111b.

In particular, the mixing unit 112 is fluidically connected, at an outlet, to the first end 121 of the conveying duct 120.

For example, the mixing unit 112 is a static mixer, in particular of the insert type contained in a tube.

According to another example not shown, the injection system comprises a single container. In particular, the single container is fluidically connected, at the outlet, to the first end of the conveying duct.

The encapsulating product 20 or the components 20a, 20b forming the encapsulating product are stored in the injection system 110. In other words, the injection system 110 acts as a tank for the encapsulating product 20 or the components 20a, 20b forming the encapsulating product.

For example, the injection system 110 is configured to eject the encapsulating product 20 outside the injection system.

The injection system 110 may be operated pneumatically, hydraulically, electrically or manually.

The dimensions of the conveying duct 120 are such that it can be moved within the internal space 2. In particular, the conveying duct 120 has dimensions smaller than those of the internal space 2.

For example, the conveying duct 120 is flexible, i.e. it has the ability to bend to adapt to various shapes, particularly curves, without losing its structural integrity. Such a flexible conveying duct is particularly suitable when the installation requires a change of direction to access the foreign material 10.

The conveying duct 120 is for example made of plastic, such as polyamide, and for example nylon.

The conveying duct 120 has a length, corresponding to the distance between the first end 121 and the second end 122, which is for example greater than the distance separating the foreign material 10 from the opening 4 of the installation 1. In this way, part of the conveying duct 120 can remain outside the installation 1 during the step of capturing, making it easier to handle.

According to one example embodiment, the retrieval device 100 comprises means for mechanically securing the encapsulating product 20 to the conveying duct 120 together, when the encapsulating product 20 is solidified. In other words, the conveying duct 120 is provided with means for mechanically securing the encapsulating product 20 to it when the encapsulating product 20 is solidified.

When the encapsulating product 20 solidifies around the foreign material 10, it also solidifies in the conveying duct 120 where these means are provided, thereby mechanically securing the encapsulating product to the conveying duct together.

According to an example, the means for mechanically securing the encapsulating product 20 to the conveying duct 120 comprise a porous material.

In particular, the porous material is configured to be impregnable by the encapsulating product 20.

For example, the porous material is fixed to or formed by the conveying duct 120 so that the porous material is impregnated by the encapsulating product 20 during the step of discharging encapsulating product. As a result, the encapsulating product 20 is bonded to the porous material when it is solidified and it is thus mechanically secured to the conveying duct 120.

For example, these means comprise or are made of a piece of fabric, in particular of a wool yarn.

According to another example, the means for mechanically securing the encapsulating product 20 to the conveying duct 120 together are made of a piece of solidified encapsulating product. The encapsulating product 20 is configured so that when encapsulating product 20 is discharged onto a piece of solidified encapsulating product, it is bonded to the piece of solidified encapsulating product.

For example, the piece of solidified encapsulating product is attached to the conveying duct 120 so that the piece of solidified encapsulating product is in contact with the encapsulating product 20 during the step of discharging encapsulating product. As a result, the encapsulating product 20 is bonded to the piece of solidified encapsulating product when it is solidified and it is thus mechanically secured to the conveying duct 120.According to yet another example, the means for mechanically securing the encapsulating product 20 to the conveying duct 120 together are constituted by a section of the transport duct 120 which is configured to prevent the encapsulation product 20 from moving within said conveying duct when it is solidified.

As a result, when the conveying duct 120 is pulled, walls of the section press against the solidified encapsulating product 20 and force it to move with the conveying duct.

The section is located, for example, at the free end 122 of the conveying duct 120.For example, the section is smaller than the rest of the conveying duct 120. In particular, the section comprises a conical or pyramidal shape, with the cross-section decreasing on the side of the free end 122.

According to one example embodiment, the retrieval device 100 comprises means 130 for detecting the foreign material 10.

For example, the means 130 comprise a camera and a screen (not shown), located outside the installation 1 and configured to display images captured by the camera in real time.

As shown in Figures 1 and 2, the camera is separate from the conveying duct 120. However, the camera can be mounted on the conveying duct 120, in particular at the free end 122, of the retrieval device 100

With reference to Figure 1, at least a part of the conveying duct 120 is inserted, for example manually, into the internal space 2.

In other words, the method for retrieval the foreign material 10 comprise a step of inserting at least part of the conveying duct 120 into the internal space.

For example, the step of detecting S1 the foreign material 10 is carried by means 130.

In particular, the step of detecting S1 the foreign material 10 can be carried out by moving the conveying duct 120 inside the internal space 2.

Once the foreign material 10 is detected, the conveying duct 120 is inserted until its second end 122 is in the vicinity of the foreign material, in order to facilitates the step of discharging S21 encapsulating product 20 onto the foreign material 10 and to limit the quantity of encapsulating product 20.

For example, the conveying duct 120 is inserted until its second end 122 is positioned as close as possible to the foreign material 10. In particular, the second end 122 can be positioned within a few centimeters or even a few millimeters from the foreign material 10, or even touching the foreign material.

With reference to Figure 2, the step of discharging S21 the encapsulating product 20 is carried by the injection system 110 and the conveying duct 120.

In particular, the injection system 110 is operated, pushing the encapsulating product 20 into the conveying duct 120 until the encapsulating product is discharged from the free end 122 of the conveying duct.

With reference to Figure 2, the step of mixing S20 of components 20a and 20b can be carried by the injection system 110.

For example, the step of mixing S20 is carried out by pushing the components 20a and 20b contained respectively in the containers 111a and 111b, into the mixing unit 112 of the injection system 110.

According to one example embodiment, the step of discharging S21 is carried out by continuously injecting encapsulating product 20 into the conveying duct 120 until the foreign material 10 is at least partially encapsulated by the encapsulating product 20. Thus, the encapsulating product 20 extends uninterruptedly in the conveying duct 120 between the foreign material 10 and the injection system 110, forming an uninterrupted, i.e. continuous, mechanical link, like a ribbon or a string, between the foreign material 10 and the injection system 110.

According to another example embodiment, the step of discharging S21 is carried out by injecting a predefined amount of encapsulating product 20 into the conveying duct 120 and then by injecting a fluid, such as water or air, optionally under pressure if needed, in order to displace the predefined amount of encapsulating product until the foreign material 10 is at least partially encapsulated by the encapsulating product 20.For example, the step of discharging S21 the encapsulating product 20 is monitored by the means 130 to ensure that the encapsulating product 20 discharges onto the foreign material 10.

For example, the step of encapsulating S22 is monitored by the means 130 to ensure that encapsulating product 20 encapsulates at least a portion of the foreign material 10.

For example, the step of solidifying S23 is monitored by the means 130.

With reference to Figure 3, the step of displacing S3 the solidified encapsulating product 2 is carried out by moving the retrieval device 100.

This is made possible in particular by the means for mechanically securing the encapsulating product 20 to the conveying duct 120 together, when the encapsulating product is solidified.

However, the step of displacing S3 can be carried out without these means, in particular when the quantity of encapsulating product 20 in the conveying duct 120 is such that the displacement of the solidified encapsulating product inside the conveying duct is limited of prevented.

In other words, in certain cases, the means for mechanically securing the encapsulating product 20 to the conveying duct 120 together, when the encapsulating product is solidified, only improve the mechanical securing between the conveying duct and the solidified encapsulating product.

Thanks to the use of the encapsulating product, the method according to the invention makes it possible to retrieve foreign materials of various shapes and sizes, while being relatively simple to implement. In fact, the method requires limited equipment and does not require a specific element for a particular shape or size of foreign material. Such a method can therefore be implemented quickly and efficiently, which is particularly safe in the case of a foreign material located in a nuclear reactor installation.

As an alternative, the retrieval device comprises a tank, which stores the encapsulating product, and from which it can be discharged directly onto the foreign material, by allowing it to drain from the tank or container.

## Claims

1. A method of retrieving a foreign material (10), located in an internal space (2) of an installation (1), comprising steps of:
- capturing (S2) the foreign material (10) with an encapsulating product (20), the step of capturing (S2) comprising:
• a step of discharging (S21) the encapsulating product (20) onto the foreign material (10);
• a step of encapsulating (S22) at least a portion of the foreign material (10) with the encapsulating product (20); and
• a step of solidifying (S23) the encapsulating product (20) around the at least one portion of the foreign material (10) whereby the foreign material (10) is mechanically secured into the solidified encapsulating product (20); and
- displacing (S3) the solidified encapsulating product (20) so as to displace the foreign material (10).

2. Method of retrieving according to claim 1, wherein the step of solidifying (S23) is carried out at a temperature comprised between 10°C and 50°C.

3. Method of retrieving according to any one of claims 1 or 2, wherein the step of solidifying (S23) is carried out within a liquid.

4. Method of retrieving according to any one of claims 1 to 3, wherein the step of solidifying (S23) takes place between 5 minutes and 4 hours after the step of discharging (S21).

5. Method of retrieving according to any one of claims 1 to 4, comprising a step of mixing (S20) two components to obtain said encapsulating product (20).

6. Method of retrieving according to any one of claims 1 to 5, wherein said encapsulating product (20) is a bi-component addition silicone.

7. Method of retrieving according to any one of claims 1 to 6, wherein said encapsulating product (20) is a room temperature vulcanization silicone.

8. Method of retrieving according to any one of claims 1 to 7, wherein the step of discharging (S21) is carried out by means of a retrieval device (100), said retrieval device (100) comprising a conveying duct (120).

9. Method of retrieving according to claim 8, comprising a step of inserting at least part of the conveying duct (120) of said retrieval device (100) into the internal space (2) of the installation (1), the encapsulating product (20) being discharged from one end (122) of the said conveying duct (120).

10. Method of retrieving according to claims 8 or 9, wherein said retrieval device (100) comprises means (130) for detecting the foreign material (10), the means (130) for detecting comprising a camera.
